# EUROPEAN PATENT SPECIFICATION

(11) **EP 0 301 712 B1**
(45) Date of publication and mention of the grant of the patent: **10.11.1993**
(21) Application number: 88306060.0
(22) Date of filing: 04.07.1988
(51) Int. Cl.: H04N 7/133

(54) **Data encoding**
Datenkodierung
Codage de données

(30) Priority: 09.07.1987 GB 8716195
(43) Date of publication of application: 01.02.1989
(73) Proprietor: BRITISH TELECOMMUNICATIONS public limited company, London EC1A 7AJ (GB)
(72) Inventor: Morrison, David Geoffrey, Ipswich Suffolk, IP10 0XF (GB); Heron, Andrew Peter, Ipswich Suffolk, IP6 8ER (GB)
(74) Representative: Lloyd, Barry George William

(56) References cited:
- WO-A-87/02854
- IEEE INTERNATIONAL CONFERENCE ON COMMUNICATIONS, Toronto, 22nd-25th June 1986,vol. 1, pages 381-384, IEEE, New York, US; J. GUICHARD et al.: "Intra- and inter frame transform coding for moving pictures transmission"
- IEEE GLOBAL TELECOMMUNICATIONS CONFERENCE, Houston, 1st-4th December 1986, vol.1, pages 271-275, IEEE, New York, US; M. OHTA et al.: "Adaptive VWL coding of transform coefficients for sub-primary rate video transmission"
- IEEE TRANSACTION ON ACOUSTICS, SPEECH, AND SIGNAL PROCESSING, vol. ASSP-32, no. 1, February 1984, pages 173-177, IEEE, New York, US; K.N. NGAN: "Image display techniques using the cosine transform"

## Description

The present invention relates to an apparatus and method for encoding a set of values - eg of transform coefficients in a video coder

PCT Application no WO-A-87/02854 published on 7th May 1987 describes the following method of coding image signals. The method seeks to determine whether it is more efficient to conduct interframe coding or intraframe coding of blocks transformed by a discrete cosine transform. A method of scanning the transform block is to scan the block according to some scanning route to produce a sequence of coefficients that will be coded in order. It is stated in this patent application that this coding is not completely satisfactory because it does not take into account the structure of the block, ie the location of the most important coefficients. Therefore, for a block presenting mainly non-zero coefficients on the first line, zigzag scanning, for example, produces a sequence comprising a large number of zero coefficients. This is of no interest because the zero coefficients, which carry no information for the reconstruction of the image, will be taken into account by the statistical coder and will necessarily increase the volume of code produced by the latter.

To counteract this disadvantage it is proposed by the referenced application to use several scans each adapted to the characteristics of the blocks. For this, a set of classes is defined a priori to represent the possible different structures of a block and each class is associated with a particular scanning route of the elements constituting the block. A method of determining the scanning route best adopted is described as follows. One scans the block according to the scan associated with a particular class of block to produce a set of coefficients and one determines how many of the coefficients taken in order it is necessary in order to arrive at a predetermined percentage, for example 95%, of the total energy of the block. This is done for each of the predetermined scanning routes. One then compares the sets obtained according to each of the scanning route and one chooses as the best scanning route the one that provides the shortest set necessary to reach the predetermined percentage of the energy of the block.

Those elements of European patent application EP-A-0267578 published on 18th May 1988 which are covered by the right of priority claimed therein from Japanese patent applications numbers JP267338/86 and JP267339/86, both filed on 10th November 1986, constitute prior art under Article 54(3) EPC. EP-A-0267578 and JP267338/86 disclose selecting a scanning route from a number of scanning routes which provides the longest final sequence of values which do not exceed a threshold value.

According to one aspect of the present invention there is provided apparatus for encoding a set of values, comprising:
assessment means for receiving the values in a first order and for examining the values received in the said first order in each of a plurality of predetermined orders of the values;
CHARACTERISED IN THAT:
the assessment means includes a plurality of sections each arranged to examine, concurrently with the other sections, the values to identify which of those values which exceeds a set threshold occupies the last position in a respective one of the predetermined orders and to produce an output indicating that position; and in that the apparatus further includes
a comparator means responsive to the outputs of the assessment means to identify that one of the predetermined orders having the lowest indicated position; and
output means arranged to produce an output which comprises the values in the predetermined order thus identified.

According to another aspect of the present invention there is provided a method of encoding a set of values, comprising:
receiving the values in a first order;
examining the values received in the said first order in each of a plurality of predetermined orders of the values;
CHARACTERISED IN THAT:
concurrently, for each of the predetermined orders, the values are examined to identify which of those values which exceeds a set threshold occupies the last position in each of the predetermined orders;
signals are produced indicating those positions;
the signals are compared to identify that one of the predetermined orders having the lowest indicated position; and
an output is produced which comprises the values in the predetermined order thus identified.

Other optional features of the invention are defined in the sub-claims.

One embodiment of the invention will now be described, by way of example, with reference to the accompanying drawings, in which:
Figure 1 is a block diagram of a coder;
Figure 2 illustrates a block of transform coefficients;
Figure 3 is a block diagram of the sequence selector 4 of figure 1;
Figure 4 is a block diagram of the assessment means 12 of figure 3;
Figure 5 is a block diagram of the resequencer 5 of figure 1; and
Figure 6 is a block diagram of an alternative form of the assessment means 12 of figure 3.

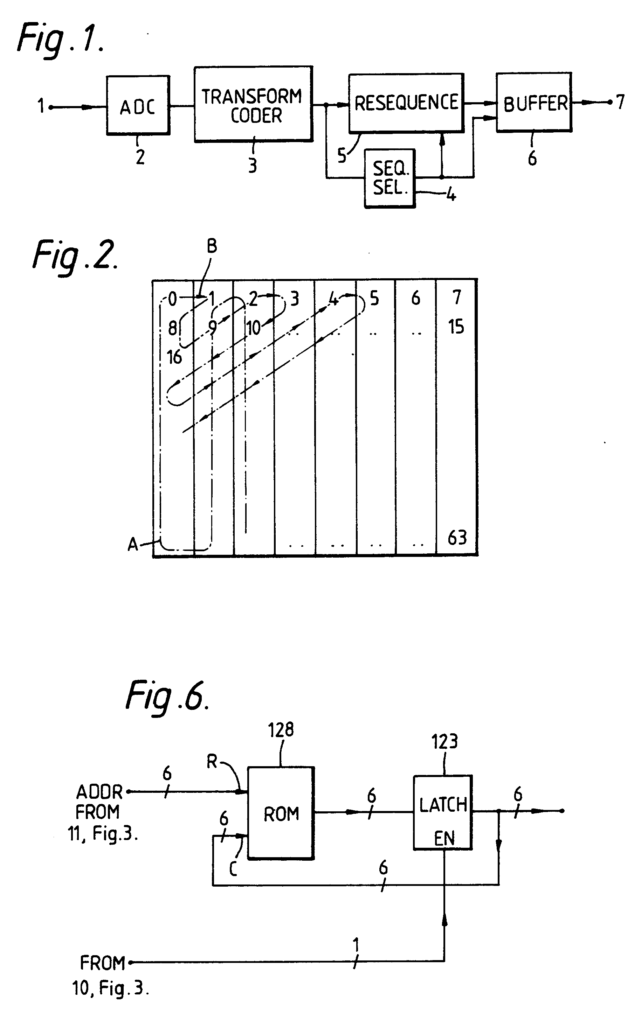

The video coder shown in Figure 1 has a video input 1, and an analogue to digital converter 2. This is followed by a transform coder 3. Each frame of the picture is notionally divided into blocks of picture elements (pixels) and each block subjected to a two-dimensional transform such as the discrete cosine transform (DCT) to produce a block of coefficients. One object of conversion into the transform domain is to effect a reduction in the quantity of data which needs to be encoded for transmission, since the number of bits used for encoding each coefficient can be tailored to the relative contribution of that coefficient to the picture quality. In particular, coefficients which are insignificantly small or zero need not be transmitted.

Other redundancy reduction techniques such as the use of inter-frame comparison (before or after the transform coder) so that data needs to be transmitted only in respect of blocks which have changed between frames, differential coding, and the use of motion compensation, may also be employed if desired. However these, like transform coding itself, are well known in the picture coding field and will not be described further.

The transform coder output is supplied to a sequence selection unit 4, and a resequencer 5 which outputs the coefficients of a block in an order - determined by the unit 4 - different from that in which they were received.

As previously mentioned, each frame (or field) of the picture is divided into blocks; for example 8 pixel x 8 line blocks may be employed. After transformation, each block gives rise to an 8x8 block of coefficients, as illustrated schematically in Figure 2 with the coefficients numbered (arbitrarily) 0 to 63. Conventionally (though not necessarily) these are represented as a matrix ordered as to sequency, the upper left coefficient (0) representing the mean level of brightness of the block (the "dc" coefficient) and coefficients increasing in horizontal and vertical sequency as one moves to the right or downwards. "Sequency" is the equivalent in the case of a discrete transform of frequency in the case of a continuous transform; the higher sequency coefficients carry information about the higher spatial frequency components of the picture. Generally these are smaller than the dc or lower sequency coefficients and commonly are more coarsely quantised before transmission. Some of these indeed may be zero and others may be so small as to be set to zero by a thresholding process.

In order to reduce the number of coefficients that require to be transmitted, it is proposed to vary the sequence in which the coefficients are transmitted, by defining a number - perhaps eight - of different orders of transmission. Two possible sequences are illustrated by arrowed lines A,B in Figure 2. Once the last non-zero coefficient has been sent, transmission (for that block) can be terminated. The purpose of the selector 4 is to determine which order of transmission results in the maximum number of zeros at the end of the sequence, thereby minimising the number of coefficients that have to be sent.

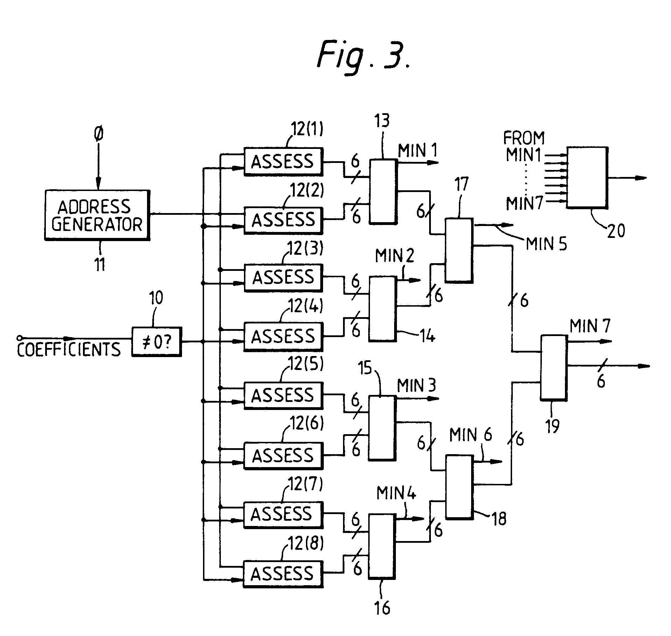

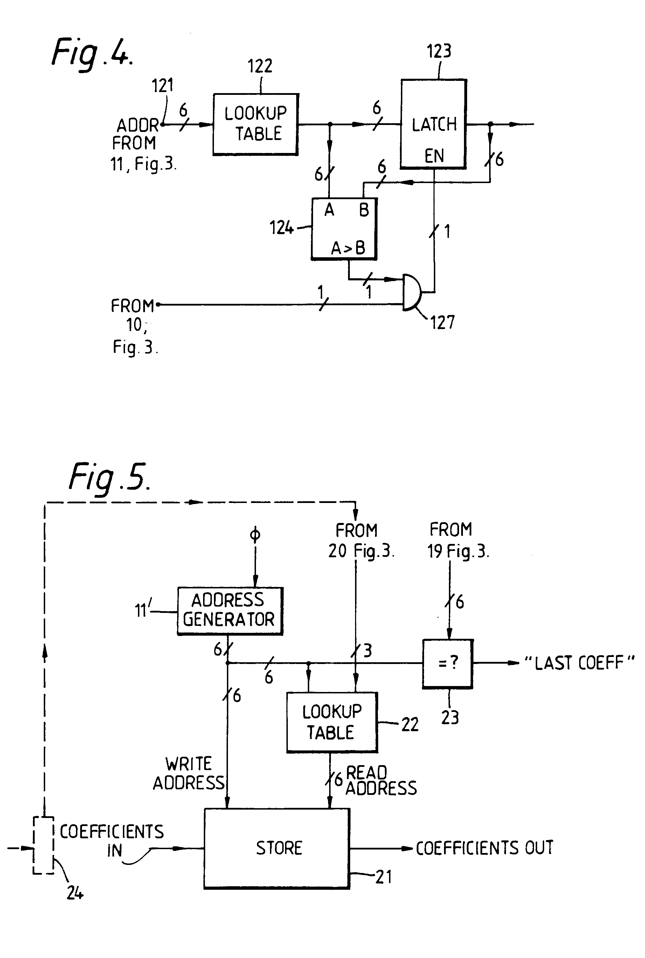

The selector 4 is shown in more detail in Figure 3 and has an input to which a set of 64 coefficients for each block in turn are supplied by the transform coder 3. The processing of a single block will be described, it being understood that processing of subsequent blocks occurs in like manner.

An address generator 11 produces a sequence of 64 unique addresses synchronously with the appearance of the coefficients at the input. The sequence in which they appear is immaterial: for the purposes of further description it will be assumed that the generator is a 6-bit binary counter and addresses are the numbers shown in Figure 2. Assessment means 12 serves to ascertain which of the eight possible orders is best suited to the transmission of the particular block. Each address in turn is passed to it, along with the corresponding coefficient, the latter via a circuit 10 which produces a '1' output if the coefficient is non-zero. The assessment means 12 has eight sections 12(1)-12(8), one of which is shown in Figure 4.

The addresses, applied at input 121, pass to a look up table stored in a read-only memory 122. This stores the position, in the relevant one of the eight orders, of each coefficient - ie the output of the memory 122 is a translated address. For example, assuming order B of Figure 2, address 10 represents the eighth coefficient and that order and therefore address 10 translates to 7.

As each translated address appears at the output of the memory 122 it is loaded into a latch 123 if
(a) it is greater than the previous address stored in the latch
AND
(b) the coefficient is non-zero.
For this purpose there is provided a comparator 124 which receives the outputs of the memory 122 and the latch 123 and produces a '1' output if the former is greater than the latter. The output of the comparator and the output of the circuit 10 of figure 3 drive a load enable input of the latch 123 via an AND gate 127. After the address generator 11 has cycled through its 64 addresses, the content of the latch 123 (which is the output of the section) will be the largest translated address that is associated with a non-zero coefficient.

Each of the sections 12(1)-12(8) is identical except for the content of the look up table 122 which corresponds in each case to a respective one of the eight orders - although if the order in which the coefficients were originally supplied is one of the eight, then one section could omit the table 122. When all 64 addresses have been scanned by the address generator, the outputs of the eight sections are compared to determine which is the lowest.

This function is performed by a comparator tree (Figure 3) consisting of six read-only memories 13-19 each of which receives two addresses from assessment section outputs or an earlier such memory and produces as output the lower address. The outputs min1 ... min6 access a further read-only memory 20 to produce a code indicating which of the eight sections provided the lowest address, the address itself appearing at the output of the last stage 19 of the tree.

The resequencer 5 is shown in figure 5. (The address generator 11 is shown again for clarity). The coefficient selection operates in two phases, the first of which has been described above. During this first phase, the coefficients are stored in a store 21 with the aid of the address generator 11. In the second phase, the coefficients are read out from the store; for this purpose the address generator 11 again cycles through its sequence, as before, but the addresses generated pass to the store 21 via a read-only memory 22 containing eight translation tables each of which is the reverse of the contents of all eight stores 12(1)-12(8) - ie the generated address is interpreted as the position in the required order and the table provides the corresponding store address. Which of the eight tables is used is determined by the output of the read-only memory 20 which is applied to the higher order address lines of the memory 22. In this way the coefficients are read out in the selected order. The output of the comparator 19 is fed to a comparator 23 which produces a "last coefficient" pulse when the address generator reaches the address indicated. This pulse can be used to prevent the zero coefficients being entered into the output buffer 6 (Figure 1) and hence to the output 7 of the coder.

In practice, for speed of operation, the two phases can be carried out simultaneously, the store 21 actually consisting of two stores one of which is being written to whilst the other is being read out.

Figure 6 shows a modified version of the section shown in Figure 4, in which the function of the lookup table 122 and comparator 124 are performed by a read-only memory 128. This may be regarded as having a row address R provided by the address generator 11 and column address C provided by the output of the latch 123. All locations having a translated row address greater than the column address contain the translated row address; other locations contain the column address.

The buffer 6 may be preceded by other coding arrangements such as a variable length coder.

In order to decode the transmitted sequence, it is necessary for a decoder to be informed of the transmission sequence used, and hence figure 1 shows the output of the sequence selector 4 connected to the output buffer 6, so that the sequence code output by the lookup table 20 of figure 3 is included in the transmitted data.

The number of coefficients sent may be communicated explicitly (by transmitting also the output of the comparator 19) or implicitly - as is assumed below - by transmitting an end of run code following the last coefficient.

The circuit shown in figure 5 may also be used in a decoder. The received signal would first be pre-processed (not shown) by a variable length decoder or other means appropriate to the method of transmission used. Then the sequence code is stripped by an additional unit 24 (shown in broken lines) and supplied to the lookup table 22. The coefficients are entered into the store 21 by means of the address generator 11 (driven by suitable clock recovery means, not shown) and read out using the part of the lookup table 22 selected by the received sequence code. They may then be subjected to an inverse transform operation.

It will be appreciated that some or all of the functions of the coder sequence selector 4 and/or the resequencer 5 could if desired be performed by suitably programmed digital processing means.

A typical program listing in pseudo-language is set out below for the sequence selection. The first part of the 'ACTION' segment performs the same function as the assessment means in figure 3 and finds the position of the last non-zero coefficient in each scanning order. The second part examines these positions in turn to find the minimum and performs the same function as the tree structured comparators 13-20 in figure 3. The program assumes 64-element blocks, but any desired block size may of course be used.
(Selected Sequence now indicated by BEST and number of coefficients to be sent is in TEMP).

## Claims

1. Apparatus for encoding a set of values, comprising:
assessment means (4,5) for receiving the values in a first order and for examining the values received in the said first order in each of a plurality of predetermined orders of the values;
CHARACTERISED IN THAT:
the assessment means (4,5) includes a plurality of sections (12) each arranged to examine, concurrently with the other sections (12), the values to identify which of those values which exceeds a set threshold occupies the last position in a respective one of the predetermined orders and to produce an output indicating that position; and in that the apparatus further includes
a comparator means (13-19) responsive to the outputs of the assessment means to identify that one of the predetermined orders having the lowest indicated position; and
output means arranged to produce an output which comprises the values in the predetermined order thus identified.

2. An apparatus according to claim 1 further comprising address generating means (11) arranged to generate a reference, sequence of addresses and apply them to the assessment means (12) and to the output means.

3. An apparatus according to claim 2 in which each section of the assessment means includes a look-up table (122, 128) responsive to the generated addresses to provide translated addresses representing the corresponding positions in the respective predetermined order and a latch (123) for storing one address, and is arranged to store in the latch (123) any translated address which exceeds the current content of the latch (123) in the event that the associated value exceeds the set threshold.

4. An apparatus according to claim 3 in which each section of the assessment means (12) has a comparator (124) for comparing each translated address with the content of the relevant latch (123).

5. An apparatus according to claim 3 in which, in each section of the assessment means, the look-up table (128) is responsive both to the generated addresses and the address stored in the latch (123) to produce as output the generated address or the address stored in the latch according to whether the generated address is respectively greater than or not greater than the address stored in the latch, and the latch (123) is connected so to be loaded with that output whenever the associated value exceeds the set threshold.

6. An apparatus according to any one of claims 2 to 5 in which the output means comprises a store (21) operable to store the values in locations determined by the generated reference sequence of addresses and to retrieve the values in a sequence determined by a look-up table (22) controlled by the assessment means (4).

7. An apparatus according to any preceding claim in which the set threshold is non-zero.

8. An apparatus according to any one of the preceding claims in which the output means is arranged to output values only up to the said lowest indicated position.

9. A video coder comprising transform coding means (3) and an apparatus according to any one of the preceding claims for encoding sets of values representing transform coefficients.

10. A method of encoding a set of values, comprising:
receiving the values in a first order;
examining the values received in the said first order in each of a plurality of predetermined orders of the values;
CHARACTERISED IN THAT:
concurrently, for each of the predetermined orders, the values are examined to identify which of those values which exceeds a set threshold occupies the last position in each of the predetermined orders;
signals are produced indicating those positions;
the signals are compared to identify that one of the predetermined orders having the lowest indicated position; and
an output is produced which comprises the values in the predetermined order thus identified.

11. A method according to claim 10 in which the set threshold is non-zero.

12. A method according to either of claims 10 and 11 in which the values are output only up to the said lowest indicated position.

## Patentansprüche

1. Vorrichtung zum Codieren eines Satzes von Werten, wobei die Vorrichtung aufweist:
eine Bewertungseinrichtung (4, 5) zum Empfangen der Werte in einer ersten Ordnung und zum Untersuchen der in der ersten Ordnung empfangenen Werte in jeder von einer Vielzahl von vorbestimmten Ordnungen der Werte;
**dadurch gekennzeichnet, daß:**
die Bewertungseinrichtung (4, 5) eine Vielzahl von Teilsystemen (12) aufweist, wobei jedes angeordnet ist, um gleichzeitig mit den anderen Teilsystemen (12) die Werte zu untersuchen, um zu identifizieren, welcher dieser Werte, der eine eingestellte Schwelle überschreitet, die letzte Position in einer jeweiligen Ordnung der vorbestimmten Ordnungen einnimmt und um eine Ausgabe zu erzeugen, die diese Position anzeigt; und dadurch gekennzeichnet, daß die Vorrichtung weiterhin aufweist:
eine Vergleichseinrichtung (13-19), die auf die Ausgaben der Bewertungseinrichtung anspricht, um jene Ordnung von den vorbestimmten Ordnungen zu identifizieren, die die niedrigste angezeigte Position hat; und
eine Ausgabeeinrichtung, die angeordnet ist, um eine Ausgabe zu erzeugen, die Werte in der so identifizierten, vorbestimmten Ordnung enthält.

2. Vorrichtung nach Anspruch 1, die weiterhin eine Adreßerzeugungseinrichtung (11) aufweist, die angeordnet ist, um eine Referenzsequenz von Adressen zu erzeugen und sie an die Bewertungseinrichtung (12) und die Ausgabeeinrichtung anzulegen.

3. Vorrichtung nach Anspruch 2, wobei jedes Teilsystem der Bewertungseinrichtung eine Nachschlagetabelle (122, 128) aufweist, die auf die erzeugten Adressen anspricht, um übersetzte Adressen bereitzustellen, die die entsprechenden Positionen in der jeweiligen vorbestimmten Ordnung darstellen, sowie einen Zwischenspeicher (123) zum Speichern einer Adresse aufweist, und wobei jedes Teilsystem angeordnet ist, um in dem Zwischenspeicher (123) eine übersetzte Adresse zu speichern, die den momentanen Inhalt des Zwischenspeichers (123) überschreitet, und zwar im Falle, wenn der zugehörige Wert die eingestellte Schwelle überschreitet.

4. Vorrichtung nach Anspruch 3, wobei jedes Teilsystem der Bewertungseinrichtung (12) einen Komparator (124) aufweist zum Vergleichen jeder übersetzten Adresse mit dem Inhalt des relevanten Zwischenspeichers (123).

5. Vorrichtung nach Anspruch 3, wobei in jedem Teilsystem der Bewertungseinrichtung die Nachschlagetabelle (128) sowohl auf die erzeugten Adressen als auch die in dem Zwischenspeicher (123) gespeicherten Adressen anspricht, um als Ausgabe die erzeugte Adresse oder die in dem Zwischenspeicher zwischengespeicherte Adresse zu erzeugen, abhängig davon, ob die erzeugte Adresse jeweils größer oder nicht größer als die in dem Zwischenspeicher gespeicherte Adresse ist, und wobei der Zwischenspeicher (123) so verbunden ist, um an diese Ausgabe angelegt zu sein, jedesmal, wenn der zugehörige Wert die eingestellte Schwelle überschreitet.

6. Vorrichtung nach einem der Ansprüche 2 bis 5, wobei die Ausgabeeinrichtung einen Speicher (21) aufweist, der betrieben wird, um die Werte in Stellen zu speichern, die durch die erzeugte Referenzsequerz von Adressen bestimmt sind, und um die Werte in einer Sequenz wiederzugewinnen, die von einer Nachschlagetabelle (22) bestimmt ist, und zwar gesteuert von der Bewertungseinrichtung (4).

7. Vorrichtung nach einem der vorhergehenden Ansprüche, wobei die eingestellte Schwelle nicht Null ist.

8. Vorrichtung nach einem der vorhergehenden Ansprüche, wobei die Ausgabeeinrichtung angeordnet ist, um Werte nur bis zur niedrigsten angezeigten Position auszugeben.

9. Videocodierer, der eine Transformations-Codiereinrichtung (3) und eine Vorrichtung nach einem der vorhergehenden Ansprüche aufweist zum Codieren von Sätzen von Werten, die Transformations-Koeffizienten darstellen.

10. Verfahren zum Codieren von Sätzen von Werten, wobei das Verfahren aufweist:
Empfangen der Werte in einer ersten Ordnung;
Untersuchen der in der ersten Ordnung empfangenen Werte in jeder von einer Vielzahl von vorbestimmten Ordnungen der Werte;
dadurch gekennzeichnet, daß:
für jede der vorbestimmten Ordnungen die Werte gleichzeitig untersucht werden, um zu identifizieren, welcher dieser Werte, der eine eingestellte Schwelle überschreitet, die letzte Position in jeder der vorbestimmten Ordnungen einnimmt;
Signale erzeugt werden, die diese Positionen anzeigen;
die Signale verglichen werden, um jene Ordnung der vorbestimmten Ordnungen zu identifizieren, die die niedrigste angezeigte Position hat; und
eine Ansgabe erzeugt wird, die die Werte in der so identifizierten, vorbestimmten Ordnung enthält.

11. Verfahren nach Anspruch 10, wobei die eingestellte Schwelle nicht Null ist.

12. Verfahren nach einem der Ansprüche 10 oder 11, wobei die Werte nur bis zu der niedrigsten angezeigten Position ausgegeben werden.

## Revendications

1. Appareil de codage d'un jeu de valeurs, comprenant :
des moyens de détermination (4, 5) permettant la réception des valeurs dans un premier ordre, et l'examen des valeurs reçues dans ledit premier ordre pour chacun d'une pluralité d'ordres prédéterminés de valeurs ;
caractérisé en ce que :
les moyens de détermination (4, 5), incluent une pluralité de sections (12) disposées chacune pour examiner les valeurs simultanément avec les autres sections (12), de manière à identifier celles de ces valeurs excédant un seuil de positionnement, qui occupent la dernière position dans l'un respectif des ordres prédéterminés, et de manière à produire une sortie indiquant cette position ; et en ce que l'appareil inclut en outre
un comparateur (13-19) coopérant avec les sorties des moyens de détermination, de manière à identifier celui des ordres prédéterminés qui possède la position indiquée la plus basse ;
et
des moyens de sortie disposés de manière à produire une sortie comprenant les valeurs dans l'ordre prédéterminé ainsi identifié.

2. Appareil selon la revendication 1, comprenant en outre des moyens (11) de calcul d'adresse, disposés de manière à calculer une séquence référence d'adresses, et à appliquer ces dernières aux moyens de détermination 12 et aux moyens de sortie.

3. Appareil selon la revendication 2, dans lequel chaque section des moyens de détermination, inclut une table (122, 128) à consulter coopérant avec les adresses calculées, de manière à fournir des adresses translatées représentant les positions correspondantes dans l'ordre prédéterminé respectif, ainsi qu'un verrouilleur (123) pour mettre en mémoire une adresse, et est disposé de manière à mettre en mémoire dans le verrouilleur (123) une quelconque adresse translatée excédant la capacité actuelle du verrouilleur (123), dans l'éventualité où la valeur associée dépasse le seuil de positionnement.

4. Appareil selon la revendication 3, dans lequel chaque section des moyens (12) de détermination possède un comparateur (124) pour comparer chaque adresse translatée avec la capacité du verrouilleur (123) correspondant.

5. Appareil selon la revendication 3, dans lequel, au niveau de chaque section des moyens de détermination, la table (128) à consulter coopère à la fois avec les adresses calculées et les adresses mises en mémoire dans le verrouilleur (123), de manière à produire comme sortie les adresses calculées ou l'adresse mise en mémoire dans le verrouilleur et selon que l'adresse calculée est respectivement plus grande ou non que l'adresse mise en mémoire dans le verrouilleur, et le verrouilleur (123) est relié de manière à être chargé avec cette sortie dès lors que la valeur associée dépasse le seuil de positionnement.

6. Appareil selon l'une quelconque des revendications 2 à 5, dans lequel les moyens de sortie comprennent un mémoire (21) permettant la mise en mémoire des valeurs dans des emplacements déterminés par la séquence référence calculée d'adresses, et d'exhiber les valeurs dans une séquence déterminée par une table à consulter (22) contrôlée par les moyens de détermination (4).

7. Appareil selon l'une quelconque des revendications précédentes, dans lequel le seuil de positionnement est sans retour à zéro.

8. Appareil selon l'une quelconque des revendications précédentes, dans lequel les moyens de sortie sont disposés en valeur de sortie seulement jusque à ladite position la plus basse indiquée.

9. Codeur vidéo comprenant des moyens (3) de codage de transcodage, et un appareil selon l'une quelconque des revendications précédentes, pour le codage de jeu de valeurs représentant des coefficients de transcodage.

10. Procédé de codage d'un jeu de valeur, comprenant :
la réception des valeurs dans un premier ordre ;
l'examen des valeurs reçues dans ledit premier ordre dans chacun d'une pluralité d'ordre prédéterminé des valeurs ;
caractérisé en ce que :
simultanément, pour chacun des ordres prédéterminés, les valeurs sont examinées en vue d'identifier laquelle de ces valeurs excédant un seuil de positionnement, occupe la dernière position dans chacun des ordres prédéterminés ;
des signaux sont produits indiquant ces positions ;
les signaux sont comparés en vue d'identifier celui des ordres prédéterminés possédant la position indiquée la plus basse ;
et
une sortie est produite, qui comprend les valeurs dans l'ordre prédéterminé ainsi identifié.

11. Procédé selon la revendication 10, dans lequel le seuil de positionnement est sans retour à zéro.

12. Procédé selon l'une ou l'autre des revendications 10 et 11, dans lequel les valeurs constituent la sortie uniquement jusqu'à ladite position indiquée la plus basse.
